# EUROPÄISCHE PATENTSCHRIFT

(11) **EP 1 269 736 B1**
(45) Veröffentlichungstag und Bekanntmachung des Hinweises auf die Patenterteilung: **17.12.2008**
(21) Anmeldenummer: 01933585.0
(22) Anmeldetag: 05.04.2001
(51) Int. Cl.: H04M 7/00, H04Q 3/00

(54) **BEREITSTELLUNG VON CENTREX-DIENSTEN IN EINEM PAKETVERMITTELNDEN KOMMUNIKATIONSNETZ**
PACKET-SWITCHING COMMUNICATION NETWORK TERMINAL AND METHOD FOR OPERATING A TELECOMMUNICATION SYSTEM WITH A PACKET-SWITCHING COMMUNICATION NETWORK
TERMINAL D'UN RESEAU DE COMMUNICATION PAR PAQUETS, ET PROCEDE POUR FAIRE FONCTIONNER UN SYSTEME DE TELECOMMUNICATION AVEC UN RESEAU DE COMMUNICATION PAR PAQUETS

(30) Priorität: 06.04.2000 DE 10017226
(43) Veröffentlichungstag der Anmeldung: 02.01.2003
(73) Patentinhaber: Nokia Siemens Networks GmbH & Co. KG, 81541 München (DE)
(72) Erfinder: BRUMM, Thomas, 82131 Gauting-Königswiesen (DE); KLEINER, Patrick, 81476 München (DE); KLOTZ, Udo, 82061 Neuried (DE); KRESNIK, Robert, 2310 Slovenska Bistrica (SI); LÖBIG, Norbert, 64291 Darmstadt (DE); ROMANSKI, Irena, 82544 Egling (DE); ZINKL, Walter, A-1100 Wien (AT)
(86) Internationale Anmeldenummer: PCT/DE2001/001357
(87) Internationale Veröffentlichungsnummer: WO 2001/078343

(56) Entgegenhaltungen:
- KORPI M ET AL: "SUPPLEMENTARY SERVICES IN THE H.323 IP TELEPHONY NETWORK" IEEE COMMUNICATIONS MAGAZINE, IEEE SERVICE CENTER. PISCATAWAY, N.J, US, Bd. 37, Nr. 7, Juli 1999 (1999-07), Seiten 118-125, XP000835313 ISSN: 0163-6804
- STAMP, SCOTT: "IP Centrex Creates New Opportunities for Equipment Manufacturers" [Online] 2001 , TELECORDIA TECHNOLOGIES XP002179470 Gefunden im Internet: <URL: http://www.ip-centrex.org/papers_articles/ index.html> [gefunden am 2001-10-05] das ganze Dokument

## Beschreibung

Die Erfindung betrifft ein Endgerät zum Anschluss an ein paketvermittelndes Kommunikationsnetz sowie ein Verfahren zum Betreiben eines Telekommunikations-Systems mit einem paketvermittelnden Kommunikationsnetz. Das Endgerät enthält eine Datenverarbeitungsanlage und ist mit einem Teilnehmeranschluss eines paketvermittelndes Kommunikationsnetzes verbunden. Mit Hilfe des paketvermittelnden Kommunikationsnetzes werden Daten zwischen dem Endgerät und dem paketvermittelnden Kommunikationsnetz übertragen.

Es gibt verschiedene Arten von Kommunikationsnetzen, um Sprache, Videodaten und weitere Daten zu übertragen. Durch die verschiedenen Einsatzmöglichkeiten dieser Kommunikationsnetze wurden unterschiedliche Dienste und Leistungsmerkmale für jedes dieser Kommunikationsnetze entwickelt. Konventionelle Kommunikationsnetze zur Sprachübertragung sind im allgemeinen leitungsvermittelnde Kommunikationsnetze und Kommunikationsnetze zur Übertragung von anderen Daten sind üblicherweise paketvermittelnde Kommunikationsnetze, wie z.B. ein lokales Computernetzwerk (Local-Area-Network; LAN) oder das Internet. Jedoch können derzeit Sprach-, Daten- und Videodienste von beiden Kommunikationsnetzarten bereitgestellt werden. So ist es z.B. möglich, einen Teilnehmer über ein paketvermittelndes Kommunikationsnetz mit dem leitungsvermittelnden Kommunikationsnetz zu verbinden. Ergänzende Dienste (Supplementary Services), wie z.B. Rufübernahme, Dreierkonferenz, große Konferenz, Halten, Anzeige von Gebühreninformationen, geschlossene Benutzergruppe, Rufnummernidentifikation, automatischer Rückruf bei besetzt, automatischer Rückruf bei keiner Antwort, Rufsperren, Indikation von wartenden Nachrichten und Anrufweiterleitungen, die in bekannten leitungsvermittelnden Kommunikationsnetzen bereitgestellt werden, können teilweise auch in paketvermittelnden Kommunikationsnetzen genutzt werden. Dazu sind Standards, z.B. in der H.323 basierenden Serie von Empfehlungen der International Telecommunication Union - Telecommunications Standardisation Sector (ITU-T Empfehlung) für paketvermittelnde Kommunikationsnetze definiert. Zu diesen Standards gehören insbesondere die Standards H.323, H.225 und H.450.

Es ist weiterhin eine H.323-Architektur für ergänzende Dienste bekannt, bei der eine Möglichkeit des Zusammenwirkens der Dienste zwischen leitungsvermittelnden und paketvermittelnden Kommunikationsnetzen besteht. So ist z.B. bekannt, dass nutzkanalbezogene Signalisierungsnachrichten zur Aktivierung, Deaktivierung, Anforderung und Steuerung von Diensten und Leistungsmerkmalen im leitungsvermittelnden Kommunikationsnetz auf Signalisierungspakete abgebildet werden, die im paketvermittelnden Kommunikationsnetz verwendet werden. Vorzugsweise werden im leitungsvermittelnden Kommunikationsnetz sogenannte DSS1-Nachrichten genutzt, die in den ITU-Standards Q.931 und Q.932 definiert sind. Im paketvermittelnden Kommunikationsnetz, insbesondere im Internet, wird zum Übertragen der Signalisierungspakete vorzugsweise das standardisierte H.225-Signalisierungsprotokoll verwendet. Dienst- und Leistungsmerkmale, zu deren Nutzung nutzkanalbezogene Signalisierungsnachrichten benötigt werden, sind z.B. Rufübernahme, Dreier-und große Konferenz, Halten, Anzeigen von Gebühreninformationen, geschlossene Benutzergruppe und die Rufnummernidentifikationsdienste. Für Statusabfragen sowie zur Aktivierung bzw. Deaktivierung von Dienstmerkmalen, wie z.B. Rufumleitung, automatischer Rückruf bei besetzt, automatischer Rückruf bei keiner Antwort, und bei der Indikation von wartenden Nachrichten ist eine nutzverbindungsunabhängige bzw. nutzkanal unabhängige Signalisierung erforderlich.

Zur Sprachübertragung gemäß dem H.323-Standard sind Komponenten, wie z.B. Terminals, Gateway und Gatekeeper vorgesehen und definiert. Terminals sind Endgeräte, die mit dem paketvermittelnden Kommunikationsnetz verbunden sind. Bei paketvermittelnden Kommunikationsnetzen ist es nötig, dass der Teilnehmer sich mit seinem Endgerät anmeldet bzw. einlogged. Ein Gateway dient als Schnittstelle zur Umsetzung der Datenprotokolle zwischen paketvermittelndem Kommunikationsnetz und leitungsvermittelndem Kommunikationsnetz. Ein Gatekeeper dient zur Verwaltung und Kontrolle von Benutzerdiensten und Netzkapazitäten eines paketvermittelnden Kommunikationsnetzes gemäß dem H.323-Standard. Im Gatekeeper erfolgt auch die Adressierung eines ankommenden Anrufes im paketvermittelnden Kommunikationsnetz. Jeder Teilnehmer hat im paketvermittelnden Kommunikationsnetz eine Adresse. Die von einem rufenden Teilnehmer gewählte Telefonnummer wird vom Gatekeeper auf die Adresse des Teilnehmers im paketvermittelnden Kommunikationsnetz umgesetzt. Somit können mit dem H.323-Standard Telefonanrufe im Internet bzw. in auf einem Internetprotokoll basierenden Netzen übertragen werden.

Große paketvermittelnde Netzwerke bieten die Möglichkeit, dass mehrere Mitarbeiter, die nicht bzw. nicht ständig im gleichen Büro arbeiten, über das Netzwerk gemeinsame Funktionen nutzen können. Dies ist insbesondere dann sinnvoll, wenn Mitarbeiter viel unterwegs sind oder die Mitarbeiter als Teleworker zu Hause arbeiten. Diese Mitarbeiter sind dann an einem externen Datennetz, z.B. dem Internet, angeschlossen. Über dieses Internet haben diese Mitarbeiter einen Zugang zu einem internen Datennetz der Firma, z.B. einem Intranet, sowie zum Telekommunikationsnetz, z.B. zum Sprachnetz, der Firma. Mitarbeiter, die z.B. für eine Abteilung oder an einem Projekt arbeiten, werden insbesondere zur besseren Erreichbarkeit zu Gruppen, sogenannten CENTREX-Gruppen, zusammengefasst. CENTREX ist ein spezieller Dienst, der mit Hilfe eines Netzknotens eines Telekommunikationsnetzes bereitgestellt wird. Mit Hilfe von CENTREX kann einem Teil der angeschlossenen Teilnehmer, z.B. den Mitarbeitern der Abteilung oder des Projektes eine Funktionalität angeboten werden, die in etwa der Funktionalität einer Nebenstellenanlage entspricht, obwohl sie nicht alle an der gleichen Nebenstellenanlage angeschlossen sind. Mit Hilfe des CENTREX-Dienstes kann z.B. ein ankommender Ruf für einen Mitarbeiter der Gruppe für andere, voreingestellte Teilnehmer ebenfalls sichtbar und zugänglich gemacht werden. So gibt es beim CENTREX-Dienst weiterhin die Möglichkeit, einen Teamruf oder eine Anrufübernahme voreinzustellen. Dabei wird bei einem ankommenden Ruf zu einem Teilnehmeranschluss der Gruppe eine Meldung generiert, die an die weiteren in dieser Gruppe voreingestellten Teilnehmeranschlüsse übermittelt wird. Jeder Teilnehmer der Gruppe kann dann diesen Anruf übernehmen. Auch kann jeder der Teilnehmer der Gruppe im System geparkte Anrufe übernehmen. Die Teilnehmer der CENTREX-Gruppe können auch einen gemeinsamen Rufnummernplan haben, der von allen Teilnehmeranschlüssen genutzt werden kann. Jedoch ist beim Stand der Technik das Nutzen des CENTREX-Dienstes und anderer bei Sprachverbindungen bekannten Diensten, wie Dreierkonferenz, Anrufweiterleitung, Anrufwiedergabe, Aufschalten, Ansagedienste und privater Rufnummernplan nur im leitungsvermittelnden Kommunikationsnetz möglich. Gemäß den H.323/H.450-Standards werden diese Dienste für Sprachverbindungen mit Hilfe des paketvermittelnden Kommunikationsnetzes nicht, bzw. nicht in gleichem Umfang unterstützt.

Aufgabe der Erfindung ist es, ein Endgerät zum Anschluss an ein paketvermittelndes Kommunikationsnetz sowie ein Verfahren zum Betreiben eines solchen Endgerätes anzugeben, das einem Teilnehmer neben den Dienst- und Leistungsmerkmalen des paketvermittelnden Kommunikationsnetzes weitere Dienst- und Leistungsmerkmale zur Verfügung stellt.

Die Aufgabe wird für ein Endgerät zum Anschluss an ein paketvermittelndes Kommunikationsnetz durch die Merkmale des Patentanspruchs 1 gelöst. Für ein Verfahren zum Betreiben eines Endgeräts an einem paketvermittelnden Kommunikationsnetz wird die Aufgabe durch die Merkmale des Patentanspruchs 24 gelöst.

Vorteilhafte Weiterbildungen sind in den abhängigen Ansprüchen angegeben.

Insbesondere durch das Verarbeiten weiterer Signalisierungsinformationen können einem Teilnehmer weitere Dienst- und/oder Leistungsmerkmale zur Verfügung gestellt werden, die vom paketvermittelnden Kommunikationsnetz an sich nicht unterstützt werden. Diese Signalisierungsinformationen können zu einem weiteren Teilnehmeranschluss des paketvermittelnden Kommunikationsnetzes oder zu einem weiteren Kommunikationsnetz übertragen werden. Das weitere Kommunikationsnetz, z.B. ein öffentliches Telekommunikationsnetz, kann mit Hilfe der Signalisierungsinformationen dem an das paketvermittelnde Kommunikationsnetz angeschlossenen Endgerät weitere Dienst- und/oder Leistungsmerkmale zur Verfügung stellen. Somit lassen sich insbesondere Dienst- und Leistungsmerkmale auch Teilnehmeranschlüssen des paketvermittelnden Kommunikationsnetzes zur Verfügung stellen, die in bekannten leitungsvermittelnden Kommunikationsnetzen standardmäßig genutzt werden können. Der Teilnehmer des paketvermittelnden Kommunikationsnetzes muss somit nicht mehr auf Dienst- und/oder Leistungsmerkmale verzichten, die Teilnehmern eines leitungsvermittelnden Kommunikationsnetzes automatisch bereitgestellt werden. Die Dienst- und Leistungsmerkmale des paketvermittelnden Kommunikationsnetzes kann er weiterhin uneingeschränkt nutzen.

Bei einer vorteilhaften Weiterbildung enthält das Endgerät eine Anzeigeeinheit zum Anzeigen von Daten und eine Eingabeeinheit zur Eingabe von Daten, wobei ein zweites Programmmodul der Datenverarbeitungsanlage die übertragenen Signalisierungsinformationen in Bildinformationen zur Anzeige auf der Anzeigeeinheit wandelt sowie Informationen verarbeitet, die mit Hilfe der Eingabeeinheit eingegeben werden. Dadurch wird erreicht, dass die zum Steuern der Dienst- und/oder Leistungsmerkmale notwenigen Eingaben sowie durch diese Dienst- und/oder Leistungsmerkmale bedingten Ausgaben für den Teilnehmer komfortabel möglich sind. Durch die Trennung des Programmmoduls zum Verarbeiten der Signalisierungsinformationen und dem zweiten Programmmodul zum Wandeln der Signalisierungsinformationen in Bildinformationen sowie zum Verarbeiten der mit Hilfe der Eingabeeinheit eingegebenen Informationen ist eine von der Verarbeitung der Signalisierungsinformationen unabhängige Anzeige von Bildinformationen und Erfassung von Eingabeinformationen möglich. Die Signalisierungsinformationen können somit auch von mehreren Programmmodulen der Datenverarbeitungsanlage flexibel genutzt werden. Eine Anpassung des Programmmoduls zum Verarbeiten der Signalisierungsinformationen ist dazu nicht notwendig. Für verschiedene Benutzer der Datenverarbeitungsanlage können so auch verschiedene, nutzerspezifische Bedienoberflächen entworfen werden, die mit Hilfe des zweiten Programmmoduls umgeschaltet werden können. Weiterhin besteht die Möglichkeit, dass jeder Nutzer sein eigenes zweites Programmmodul abarbeiten lässt, indem eine für ihn angepasste Benutzeroberfläche mit spezifischen Bedienfunktionen voreingestellt ist.

Bei einer Weiterbildung der Erfindung werden die mit Hilfe des zweiten Programmmoduls erfassten Informationen mit Hilfe des Programmmoduls zur Signalisierungsinformationsverarbeitung zur Übertragung durch das paketvermittelnde Kommunikationsnetz aufbereitet. Somit können durch die Eingaben auch Dienst- und/oder Leistungsmerkmale gesteuert, aktiviert, deaktiviert und/oder verwaltet werden, die vom paketvermittelnden Kommunikationsnetz an sich nicht unterstützt werden. Das erste Programmmodul konvertiert die Eingabedaten zu Signalisierungsinformationen des paketvermittelnden Kommunikationsnetzes sowie zu weiteren Signalisierungsinformationen, die mit Hilfe des paketvermittelnden Kommunikationsnetzes übertragen werden. Alle vom ersten Programmmodul erzeugten Signalisierungsinformationen werden zu einem weiteren Teilnehmeranschluss des paketvermittelnden Kommunikationsnetzes, zu einem Teilnehmeranschluss eines mit dem paketvermittelnden Kommunikationsnetz verbundenen leitungsvermittelnden Kommunikationsnetz und/oder zu einem Signalisierungssystem eines weiteren paketvermittelnden Kommunikationsnetzes oder eines leitungsvermittelnden Kommunikationsnetzes übertragen.

Vorteilhaft ist es dabei, wenn das Programmmodul Signalisierungsdaten gemäß einem H.323/H.450-Signalisierungsprotokoll, gemäß einem DSS1-Signalisierungsprotokoll, gemäß einem QSIG-Signalisierungsprotokoll und/oder gemäß einem CORNET NC-Signalisierungsprotokoll verarbeitet. Dadurch wird erreicht, dass das Programmmodul Signalisierungsdaten gemäß standardisierten Signalisierungsprotokollen verarbeitet, die eine große Verbreitung haben. So können in einem paketvermittelnden Kommunikationsnetz mit einem Signalisierungsprotokoll gemäß dem H.323/H.450-Standard für Dienst- und/oder Leistungsmerkmale, die von diesem H.323/H.450-Standard nicht unterstützt werden, weitere Signalisierungsinformationen gemäß dem DSS1-Signalisierungsprotokoll erzeugt und weiterverarbeitet werden.

Das DSS1-Signalisierungsprotokoll ist in öffentlichen Telekommunikationsnetzen weit verbreitet. Diese weiteren DSS1-Signalisierungsinformationen können mit Hilfe von vorbestimmten Datenpaketen im paketvermittelnden Kommunikationsnetz übertragen werden und einem weiteren Teilnehmeranschluss des paketvermittelnden Kommunikationsnetzes zugeführt werden. Die DSS1-Signalisierungsinformationen können aber auch einem leitungsvermittelnden Kommunikationsnetz zugeführt werden und in diesem entsprechende Dienst- und/oder Leistungsmerkmale steuern. Dabei werden die Signalisierungsdaten vorzugsweise zum Verbindungsaufbau, zum Verbindungsabbau und/oder zum Steuern mindestens eines Dienst- und/oder Leistungsmerkmals genutzt. Ein solches Dienst- und/oder Leistungsmerkmal umfasst eine Rufübernahme, eine Dreierkonferenz, eine große Konferenz, ein Halten, eine Anzeige von Gebühreninformationen, eine geschlossene Benutzergruppe, eine Rufnummernidentifikation, einen automatischen Rückruf bei besetzt, einen automatischen Rückruf bei keiner Antwort, eine Rufsperre, eine Indikation von wartenden Nachrichten und/oder eine Anrufweiterleitung. Somit werden Dienst- und/oder Leistungsmerkmale zur Verfügung gestellt, die in leitungsvermittelnden Kommunikationsnetzen üblich sind, wodurch auch Teilnehmer des paketvermittelnden Kommunikationsnetzes z.B. Sprachverbindungen mit hohem Komfort einfach führen können.

Bei einer anderen Weiterbildung der Erfindung werden die weiteren Signalisierungsinformationen als Daten mit Hilfe des paketvermittelnden Kommunikationsnetzes übertragen. Diese Daten können z.B. als Nutzdaten mit Hilfe des paketvermittelnden Kommunikationsnetzes übertragen werden. Dadurch wird erreicht, dass für die Übertragung der weiteren Signalisierungsinformationen genügend Ubertragungskapazität zur Verfügung steht.

Bei einer anderen Weiterbildung können die weiteren Signalisierungsinformationen auch als Daten in einem Datenpaket mit Signalisierungsinformationen des paketvermittelnden Kommunikationsnetzes mit übertragen werden. Dadurch können mit Hilfe der im paketvermittelnden Kommunikationsnetz vorgesehenen Datenpakete zur Signalisierungssteuerung auch die weiteren Signalisierungsinformationen mit übertragen werden. Zusätzliche Signalisierungsverbindungen sowie das Verarbeiten von zusätzlichen Datenpaketen durch das Signalisierungssystem des paketvermittelnden Kommunikationsnetzes und durch das Programmmodul der Datenverarbeitungsanlage sind bei dieser Ausführungsform nicht notwendig.

Bei einer anderen Weiterbildung der Erfindung enthält die Datenverarbeitungsanlage ein drittes Programmmodul, das die als Daten übermittelten weiteren Signalisierungsinformationen verarbeitet. Somit kann in der Datenverarbeitungsanlage bei der Verarbeitung der Signalisierungsinformationen eine Trennung der Verarbeitung von Signalisierungsinformationen, die vom Signalisierungssystem des paketvermittelnden Kommunikationsnetzes unterstützt werden und weiteren Signalisierungsinformationen zum Steuern weiterer Dienst- und/oder Leistungsmerkmale, erreicht werden. Durch diese Trennung ist eine einfache und übersichtliche Programmstruktur in der Datenverarbeitungsanlage möglich. Auch das Anpassen sowie das Implementieren von neuen Leistungsmerkmalen ist einfach und übersichtlich möglich.

Bei einer anderen vorteilhaften Ausführungsform werden die weiteren Signalisierungsinformationen zu einem weiteren Teilnehmer oder zu einem weiteren Kommunikationsnetz nach einem Tunnelprinzip übertragen, bei dem die Signalisierungsinformationen als Daten zwischen den beiden Teilnehmern übertragen. Somit kann eine Signalisierung zwischen dem weiteren Teilnehmeranschluss oder einem weiteren Kommunikationsnetz und dem Teilnehmer erfolgen, ohne dass diese Signalisierungsinformationen mit Hilfe von Signalisierungsdaten des paketvermittelnden Kommunikationsnetzes übertragen werden müssen.

Bei einer anderen vorteilhaften Ausführungsform der Erfindung werden die von den Programmmodulen der Datenverarbeitungsanlage verarbeiteten Signalisierungsinformationen und die weiteren Signalisierungsinformationen in einer Datenbank der Datenverarbeitungsanlage gespeichert. In dieser Datenbank können auch von den Programmmodulen zu verarbeitende Signalisierungsinformationen gespeichert werden. Mit Hilfe einer solchen Datenbank ist der Zugriff der Programmmodule der Datenverarbeitungsanlage auf die Signalisierungsinformationen einfach möglich. Durch die übersichtliche Struktur von Datenbanken können Fehler bei der Verarbeitung von Signalisierungsinformationen einfach analysiert und vermieden werden. Weiterhin ist der Datenaustausch zwischen den einzelnen Programmmodulen der Datenverarbeitungsanlage mit Hilfe einer solchen Datenbank einfach möglich.

Vorteilhaft ist es auch, wenn das Endgerät eine grafische Benutzeroberfläche bereitstellt, die mit Hilfe eines fünften Programmmoduls von einem Nutzer des Endgerätes einfach an seine Bedürfnisse angepasst werden kann. Dadurch ist es möglich, dass der Bedienkomfort des Endgerätes einfach an die Bedürfnisse des jeweiligen Nutzers angepasst werden kann. Für mehrere Benutzer können dabei unterschiedliche Benutzeroberflächen gespeichert sein, die z.B. mit Hilfe des zweiten Programmmoduls umschaltbar sind.

Vorteilhaft ist es dabei auch, wenn die grafische Bedienoberfläche dargestellte Schaltflächen hat, die mit Hilfe eines Zeigergerätes oder eines Touchscreens aktiviert werden können. Somit ist eine einfache und intuitive Bedienmöglichkeit gegeben, wobei der Bedienkomfort einfach an die Bedürfnisse des jeweiligen Nutzers angepasst werden kann. Die intuitive Bedienung kann durch eine geeignete, frei wählbare Anordnung der dargestellten Schaltflächen verbessert werden. Als Bedienoberfläche kann z.B. ein konventionelles Telefon mit den Tastenelementen des Telefons dargestellt werden, wobei die Tasten die gleichen Funktionen wie bei dem dargestellten konventionellen Telefon haben. Ein erfindungsgemäßes Endgerät lässt sich als sogenanntes IP-Terminal an ein auf einem Internetprotokoll basierenden Datennetz anschließen, z.B. an das Internet. Durch die zunehmende Verbreitung von auf einem Internetprotokoll basierenden Datennetzen ist es zunehmend wünschenswert, diese Datennetze auch für konventionelle Telekommunikation nutzbar zu machen. Das erfindungsgemäße Endgerät ermöglicht das Nutzen des Datennetzes für konventionelle Telekommunikation und gewährleistet einen hohen Bedienkomfort sowie eine hohe Nutzungsqualität.

Bei einer vorteilhaften Ausführungsform ist das Endgerät ein Computersystem mit Soft- und Hardware. Insbesondere moderne Personalcomputer, die an Datennetzen betrieben werden, können als erfindungsgemäßes Endgerät genutzt werden.

Bei einem Verfahren zum Betreiben eines Endgeräts an einem paketvermittelnden Kommunikationsnetz mit den Merkmalen des Anspruchs 24 ist es möglich, dass einem Teilnehmer auch mit Hilfe eines Teilnehmeranschlusses eines paketvermittelnden Kommunikationsnetzes Dienst- und Leistungsmerkmale von konventionellen Telekommunikationsnetzen bereitgestellt werden können.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Darin zeigen:
- Figur 1: die prinzipielle Softwarestruktur eines erfindungsgemäßen Endgeräts,
- Figur 2: ein IP-Netz, das mit einem öffentlichen Telefonnetz, einem konventionellen Endgerät für IP-Netze und mit einem erfindungsgemäßen Endgerät verbunden ist,
- Figur 3: ein Beispiel einer grafischen Benutzeroberfläche, die auf einer Anzeigeeinheit des erfindungsgemäßen Endgeräts angezeigt ist, und
- Figur 4: ein weiteres Beispiel einer grafischen Benutzeroberfläche zur Anzeige mit Hilfe des erfindungsgemäßen Endgeräts.

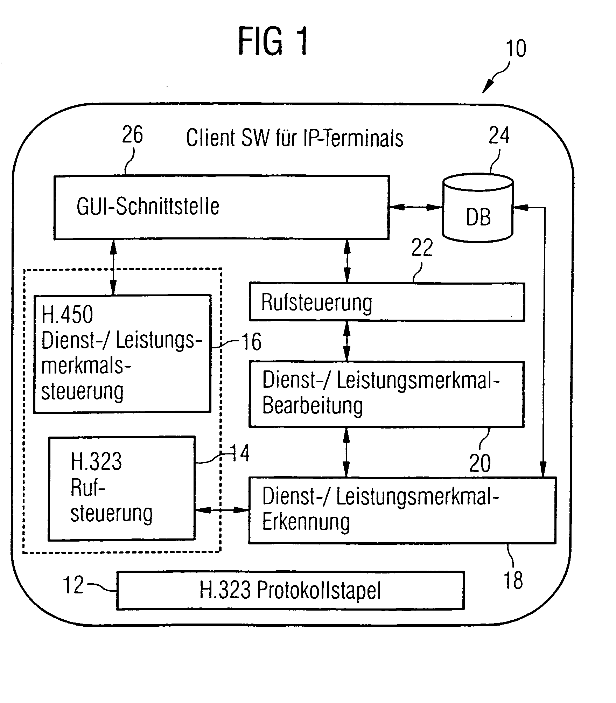

In Figur 1 ist der prinzipielle Aufbau der Software eines erfindungsgemäßen Endgerätes zum Anschluss an einen Teilnehmeranschluss eines paketvermittelnden Kommunikationsnetzes dargestellt. Das paketvermittelnde Kommunikationsnetz basiert vorzugsweise auf einem Internetprotokoll und wird auch als IP-Netz bezeichnet. Wie bereits in der Beschreibungseinleitung erläutert, ist es in IP-Netzen üblich, für konventionelle Telekommunikation, wie z.B. für Sprachverbindungen, eine Signalisierung gemäß dem H.323/H.450-Standard zu nutzen. Der H.323-Standard umfasst vorrangig die Verbindungssteuerung und der H.450-Standard umfasst vorrangig die Steuerung, Aktivierung und Deaktivierung sowie die Administration von Dienst- und Leistungsmerkmalen. Die Signalisierungsinformationen werden über das IP-Netz mit Hilfe von Signalisierungspaketen übertragen. Mit Hilfe dieser Signalisierungspakete werden die H.323/H.450-Signalisierungsinformationen sowie weitere Signalisierungsinformationen gemäß dem erfindungsgemäßen Verfahren zu dem Endgerät übertragen. Die weiteren Signalisierungsinformationen dienen zur Steuerung weiterer Dienst- und/oder Leistungsmerkmale, die vom H.323/H.450-Standard nicht unterstützt werden. Ein solches weiteres Dienst- und/oder Leistungsmerkmal kann eine Rufübernahme, eine Dreierkonferenz, eine große Konferenz, ein Halten, eine Anzeige von Gebühreninformationen, eine geschlossene Benutzergruppe, eine Rufnummernidentifikation, einen automatischen Rückruf bei besetzt, einen automatischen Rückruf bei keiner Antwort, eine Rufsperre, eine Indikation von wartenden Nachrichten und/oder eine Anrufweiterleitung umfassen.

Die zu dem Teilnehmeranschluss des Endgerätes übertragenen Signalisierungspakete werden einem H.323-Protokollstapel 12 zugeführt. Eine H.323-Verbindungssteuerung 14 verarbeitet die empfangenen Signalisierungspakete und führt gemäß den H.323/H.450-Signalisierungsinformationen eine Verbindungssteuerung durch. Die Verbindungssteuerung 14 übergibt einem H.450-Programmmodul zur Steuerung von Dienst- und/oder Leistungsmerkmalen des IP-Netzes die Signalisierungsinformationen, die die H.450-Dienst- und/oder Leistungsmerkmale betreffen. Das H.323-Verbindungssteuerungsprogramm 14 übergibt die Daten, die nicht die H.323/H.450-Signalisierung betreffen, einem Auswerteprogramm 18, das die in diesen Daten enthaltenen weiteren Signalisierungsinformationen auswertet. Das Auswerteprogramm 18 übergibt die ermittelten Signalisierungsinformationen einem Dienst- und Leitungsmerkmalsteuerprogramm 20, das mit Hilfe der weiteren Signalisierungsinformationen die entsprechenden Dienst- und Leistungsmerkmale bereitstellt.

Das Steuerprogramm 20 erzeugt weiterhin Rückmeldungen und/oder weitere Signalisierungsinformationen, die zur Steuerung der entsprechenden Dienst- und/oder Leitungsmerkmale dienen. Ein zweites Verbindungssteuerprogramm 22 dient zur Verbindungssteuerung, die insbesondere für die von dem Steuerprogramm 20 bereitgestellten Dienst- und Leistungsmerkmale erforderlich ist. Das Auswerteprogramm 18 erhält vom H.323-Verbindungssteuerprogramm 14 nicht nur die weiteren Signalisierungsinformationen, sondern auch die H.323-Signalisierungsinformationen. Das Auswerteprogramm 18 übergibt sämtliche Signalisierungsinformationen einer Datenbank 24. Ein Anzeigeprogramm 26 zur Steuerung einer grafischen Benutzeroberfläche ist mit dem H.450-Programmmodul zur Steuerung von Dienst- und/oder Leistungsmerkmalen sowie mit der Verbindungssteuerung 22 und der Datenbank 24 verbunden. Dem Anzeigeprogramm 26 werden von dem H.450-Programmmodul 16 Status- und Steuerinformationen der H.450-Dienst- und/oder Leistungsmerkmale übermittelt. Die Verbindungssteuerung 22 übermittelt dem Anzeigeprogrammmodul 26 Informationen über die Steuerung der weiteren Dienst- und/oder Leistungsmerkmale. Weiterhin hat das Anzeigeprogrammmodul 26 Zugriff auf die Datenbank 24. In der Datenbank 24 sind weiterhin benutzerspezifische Einstellungen der grafischen Benutzeroberfläche gespeichert, die von dem Anzeigeprogrammmodul 26 zur Ansteuerung der grafischen Benutzeroberfläche genutzt werden.

Die weiteren Signalisierungsinformationen können z.B. zur Signalisierung gemäß dem DSS1-Standard dienen, wodurch dem Endgerät alle Dienst- und/oder Leistungsmerkmale von konventionellen Telekommunikationsnetzen zur Verfügung gestellt werden. Die Art der Darstellung der relevanten Informationen und die Menge der angezeigten Informationen ist dabei mit Hilfe des Anzeigeprogrammmoduls 26 voreinstellbar und konfigurierbar. Wird ein solches Endgerät von mehreren Nutzern benutzt, so können unterschiedliche Benutzeroberflächen konfiguriert werden, wobei in der Datenbank 24 auch verschiedene Benutzerprofile mit unterschiedlichen Nutzungsrechten konfiguriert werden können. Das Anzeigeprogramm 26 zum Steuern der Benutzeroberfläche ist logisch getrennt von den Programmmodulen 12, 14, 16, 18, 20, 22 zum Be- und Verarbeiten von Signalisierungsinformationen. Mit Hilfe des Programmmoduls 26 kann durch diese Trennung die Benutzeroberfläche frei konfiguriert werden.

Bei einem anderen Ausführungsbeispiel erfolgt der Datenaustausch nicht ausschließlich mit Hilfe der Datenbank 24. Mit Hilfe einer Programmschnittstelle werden Daten zwischen dem Programm 26 zum Steuern der Benutzeroberfläche und den Programmmodulen 16, 22 sowie der Datenbank 24 ausgetauscht. Mit Hilfe dieser Programmschnittstelle sind verschiedene Datenfelder zum Datenaustausch definiert, wie z.B. Anzeigefeld für Rufnummern, Tastenfeld und Kurzwahltasten. Die Anzeige dieser Daten kann dann mit Hilfe des Anzeigeprogramms 26 für die einzelnen Daten individuell festgelegt sowie über ein geeignetes Bearbeitungsprogramm selbst erzeugt werden. Die mit Hilfe der Benutzeroberfläche anzuzeigenden Daten sowie das Anzeigeformat und die Darstellung der Daten sind ebenfalls in der Datenbank 24 gespeichert. Mit Hilfe von mehreren Benutzerprofilen, die in der Datenbank voreinstellbar sind, können mehrere Benutzeroberflächen konfiguriert werden, zwischen denen ein Nutzer eine für ihn geeignete Darstellungsart auswählen kann. Auch können Benutzeroberflächen, die von unterschiedlichen Nutzern konfiguriert worden sind, in der Datenbank 24 gespeichert werden und z.B. mit Hilfe von Eingabefeldern oder Schaltflächen der Bedienoberfläche umgeschaltet werden, so dass ein Nutzer eine von ihm vorkonfigurierte Bedienoberfläche jederzeit bequem einstellen und nutzen kann. Dieses Umschalten der Bedienoberfläche ist auch während einer bestehenden Verbindung zu einem anderen Teilnehmer möglich.

Ein Teilnehmer kann mit einem solchen Endgerät neben den H.323- und H.450- Dienst- und/oder Leistungsmerkmalen uneingeschränkt auch Dienst- und/oder Leistungsmerkmale nutzen, die ihm sonst nur in konventionellen Telekommunikationsnetzen zur Verfügung stehen. So kann der Teilnehmer private Rufnummernpläne sowie die dazugehörigen Leistungsmerkmale nutzen, die ihm an einem anderen Teilnehmeranschluss zur Verfügung stehen. Auch kann der Teilnehmer mit weiteren Teilnehmern des IP-Netzes und/oder eines mit diesem IP-Netz verbundenen konventionellen Telekommunikationsnetzes eine sogenannte CENTREX-Gruppe bilden. Bei einer CENTREX-Gruppe werden mehrere Teilnehmer zu einer Gruppe zusammengefasst, denen bestimmte Funktionen, wie z.B. ein gemeinsamer Rufnummernplan, Anzeige von wartenden Nachrichten sowie eine Rufübernahme zur Verfügung steht, wobei die Teilnehmer der CENTREX-Gruppe an beliebigen Teilnehmeranschlüssen des Kommunikationsnetzes anschlossen sein können. Das Endgerät kann auch Verbindungen zu Endgeräten aufbauen, die nur eine H.323/H.450-Signalisierung unterstützen. Dazu müssen keine Veränderungen an der Soft- oder Hardware des erfindungsgemäßen Endgerätes vorgenommen werden. Auch kann das Endgerät an einem leitungsvermittelnden Kommunikationsnetz betrieben werden, wobei dann nur DSS1-Signalisierungsinformationen zur Verfügung stehen. Somit kann das erfindungsgemäße Endgerät auch an einem sogenannten Terminal-Adapter angeschlossen sein, der zwischen das erfindungsgemäße Endgerät und das IP-Netz geschaltet ist und die Signalisierungsdaten des IP-Netzes in DSS1-Signalisierungsinformationen umwandelt und dem Endgerät zuführt.

Weiterhin ist es einfach möglich, neue Dienst- und Leistungsmerkmale zu vereinbaren und hinzuzufügen, die dann mit Hilfe des erfindungsgemäßen Endgeräts genutzt werden können. Die Signalisierungsdaten zum Bereitstellen und/oder Nutzen dieser neuen Dienst- und Leistungsmerkmale werden einfach als weitere Signalisierungsdaten übertragen.

Andere gleichartige Endgeräte können auch bei anderen Signalisierungsprotokollen, wie dem QSIG und dem CORNET NC-Signalisierungsprotokoll genutzt werden. Durch die freie Gestaltung der Bedienoberfläche ist es weiterhin möglich, spezifische Kundenanforderungen, wie das Darstellen von Firmenlogos, von Werbung oder das Verwenden bestimmter Farben, mit geringem Aufwand zu realisieren. Die weiteren Signalisierungsinformationen können z.B. mit Hilfe der H.323-Signalisierungspakete übertragen werden. Es ist aber auch möglich, die weiteren Signalisierungsinformationen, oder zumindest einen Teil der weiteren Signalisierungsinformationen mit Hilfe von separaten Datenpaketen des IP-Netzes zu übertragen. Bei Dienst- und/oder Leistungsmerkmalen, die sowohl mit Hilfe der H.323/H.450-Signalisierungsinformationen als auch mit den weiteren Signalisierungsinformationen durchgeführt werden können, werden beim vorliegenden Ausführungsbeispiel die H.323/H.450-Signalisierungsinformationen vorrangig genutzt. Die weiteren Signalisierungsinformationen z.B. die DSS1-Signalisierungsinformationen des gleichen Leistungsmerkmals werden nicht weiter verarbeitet, um Rückwirkungen zwischen den gleichartigen Leistungsmerkmalen zu vermeiden.

Das Auswerteprogramm 18 analysiert und verarbeitet die weiteren Signalisierungsinformationen, die mit Hilfe des IP-Netzes übertragen wurden. Diese weiteren Signalisierungsinformationen sind z.B. DSS1-Signalisierungsinformationen. Das Auswerteprogramm 18 analysiert die Signalisierungsinformationen und vergleicht diese mit dem in der Datenbank 24 gespeicherten Teilnehmerprofil. Unterstützt das gespeicherte Teilnehmerprofil das durch die Signalisierungsinformationen gesteuerte Dienst- und/oder Leistungsmerkmal, so werden die Signalisierungsinformationen dem Steuerungsprogramm 20 zum Realisieren des jeweiligen Dienst- und/oder Leistungsmerkmals übergeben. Das Steuerungsprogramm 20 führt zusammen mit der Verbindungssteuerung 22 das entsprechende Dienst- und/oder Leistungsmerkmal zusammen mit dem jeweiligen Ruf aus.

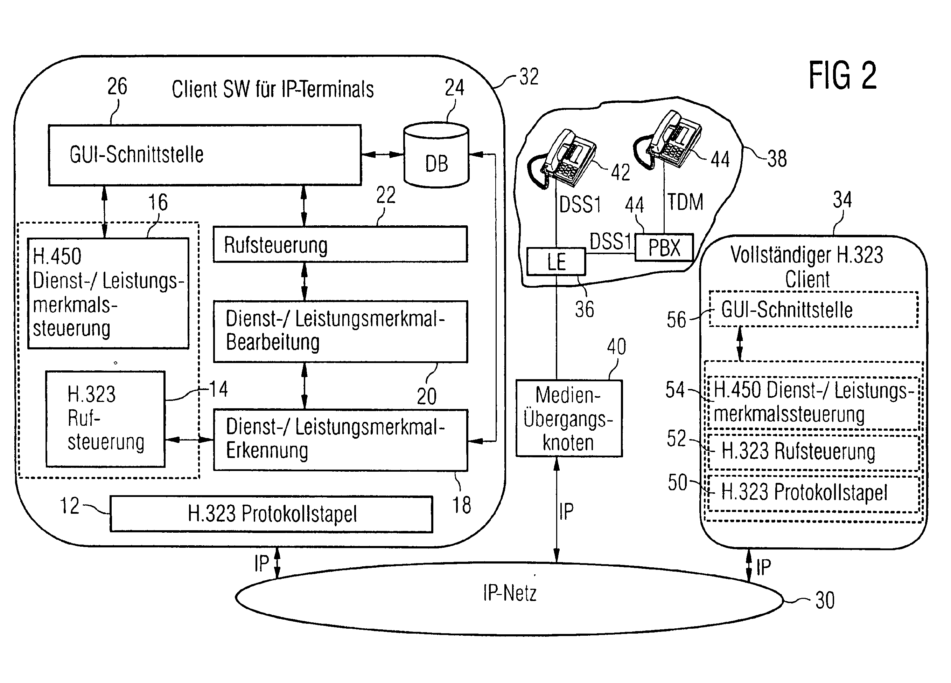

In Figur 2 ist ein auf einem Internetprotokoll basierendes Netzwerk, das IP-Netz 30, dargestellt, an das ein erfindungsgemäßes Endgerät 32, ein herkömmliches Endgerät 34, das zum Anschluss an ein IP-Netz geeignet ist, sowie eine Vermittlungsstelle 36 eines leitungsvermittelnden Kommunikationsnetzes 38 angeschlossen sind, wobei das leitungsvermittelnde Kommunikationsnetz mit Hilfe eines Mediagateways 40 mit dem IP-Netz 30 verbunden ist. An die Vermittlungsstelle 36 ist an einem Teilnehmeranschluss der Vermittlungsstelle ein Endgerät 42 und eine Nebenstellenanlage 44 angeschlossen. Die Signalisierung der Nebenstellenanlage 44 und des Endgeräts 42 erfolgt mit Hilfe von DSS1-Signalisierungsinformationen. An die Nebenstellenanlage 44 sind Kommunikationsendgeräte anschließbar, von denen ein Kommunikationsendgerät 46 dargestellt ist. Die Signalisierung zwischen der Nebenstellenanlage 44 und dem Endgerät 46 erfolgt ebenfalls mit Hilfe von DSS1-Signalisierungsinformationen.

Bei einem Verbindungsaufbau zwischen dem Endgerät 42 und dem Endgerät 32 werden die DSS1-Signalisierungsinformationen von dem Endgerät 42 mit Hilfe der Vermittlungsstelle 36 zu dem Mediagateway 40 übertragen. Das Mediagateway 40 konvertiert die DSS1-Signalisierungsinformationen in H.323/H.450-Signalisierungsinformationen. DSS1-Signalisierungsinformationen, die nicht in H.323/H.450-Signalisierungsinformationen konvertiert werden können, werden als DSS1-Signalisierungsinformationen in einem separaten Datenbereich des H.323/H.450-Signalisierungspaketes zu dem Endgerät 32 über das IP-Netz 30 übertragen. Mit Hilfe der Programmmodule des Endgerätes 32 werden die H.323/H.450-Signalisierungsinformationen sowie die DSS1-Signalisierungsinformationen, wie in Figur 1 bereits beschrieben, ausgewertet, aufbereitet und verarbeitet, so dass sie mit Hilfe einer grafischen Benutzeroberfläche dem Nutzer des Endgerätes 32 angezeigt werden können. Das Endgerät 32 erzeugt zum Steuern der Verbindung zu dem Endgerät 42 ebenfalls H.323/H.450-Signalisierungsinformationen, die mit Hilfe der Signalisierungspakete über das IP-Netz 30 zum Mediagateway 40 übertragen werden.

Zum Steuern von Dienst- und Leistungsmerkmalen, die nicht vom H.323/H.450-Signalisierungsprotokoll unterstützt werden, erzeugt das Endgerät 32 zusätzlich DSS1-Signalisierungsinformationen. Diese DSS1-Signalisierungsinformationen werden in dem bereits genannten Datenbereich der Signalisierungspakete mit zum Mediagateway 40 übertragen. Das Mediagateway 40 konvertiert die H.323/H.450-Signalisierungsinformationen in DSS1-Signalisierungsinformationen und führt diese der Vermittlungsstelle 36 zu, die zumindest teilweise zu dem Endgerät 42 weitergeleitet werden. Die in dem Datenbereich des Signalisierungspaketes übertragenen DSS1-Signalisierungsinformationen werden mit Hilfe des Mediagateways 40 ebenfalls dem Signalisierungssystem der Vermittlungsstelle 36 zugeführt. Mit Hilfe der Übertragung von DSS1-Signalisierungsinformationen über das IP-Netz 30 zum Mediagateway 40 können auch Leistungsmerkmale genutzt werden, die verbin dungsunabhängig sind, wie z.B. Rückruf bei besetzt.

Das Endgerät 34 ist ebenfalls wie das Endgerät 32 ein IP-Terminal und hat einen H.323-Protokollstapel 50, eine H.323-Verbindungssteuerung 52 und ein H.450-Programmmodul 54 zur Steuerung von Dienst- und/oder Leistungsmerkmalen. Das Endgerät 34 ist ein bekanntes Endgerät für Sprachverbindungen über IP-Netze 30. Die Verbindungssteuerung zwischen dem Endgerät 34 und dem Endgerät 32 erfolgt mit Hilfe von H.323/H.450-Signalisierungsinformationen. DSS1-Signalisierungsinformationen werden für eine solche Verbindung nicht genutzt, da sie vom Endgerät 34 nicht unterstützt werden.

Wird eine Verbindung zwischen dem erfindungsgemäßen Endgerät 32 und einem weiteren gleichartigen Endgerät hergestellt, das auch mit dem IP-Netz 30 verbunden ist, so können zur Signalisierung zwischen den beiden Endgeräten sowohl H.323/H.450-Signalisierungsinformationen als auch DSS1-Signalisierungsinformationen genutzt werden.

Das Endgerät 32 kann auch zum Endgerät 34 die DSS1-Signalisierungsinformationen übertragen, die jedoch vom Endgerät 34 nicht verarbeitet werden. Die Leistungsmerkmale, die mit Hilfe der DSS1-Signalisierungsinformationen realisiert werden sollen, stehen dann bei der Verbindung zwischen dem Endgerät 32 und dem Endgerät 34 nicht zur Verfügung.

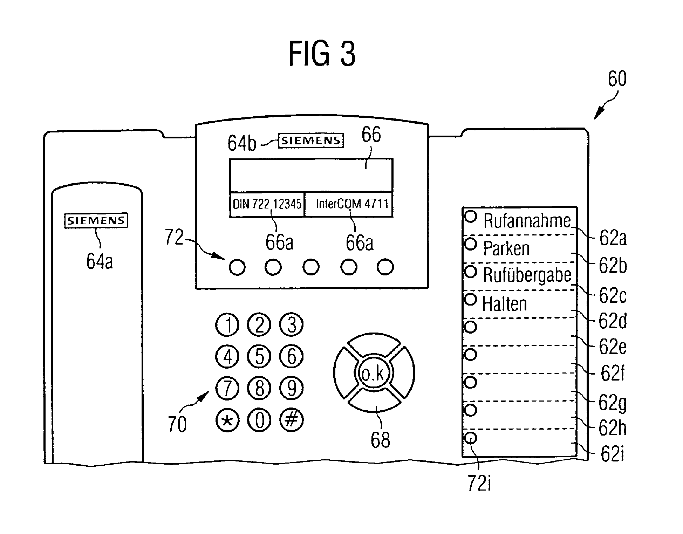

In Figur 3 ist eine mögliche Bedienoberfläche 60 des Endgerätes 32 dargestellt. Diese Bedienoberfläche 60 wird z.B. auf dem Bildschirm eines Personalcomputers angezeigt. Als Bedienoberfläche 60 wird eine Abbildung eines realen, konventionellen Telefons genutzt. Die Bedienoberfläche 60 enthält Kurzwahltasten 62a bis 62i, denen Funktionen wie Rufübernahme 62a, Parken von Anrufen 62b, Rufumleitung 62c und Halten von Nachrichten 62d zugewiesen sind. Weiteren Kurzwahltasten 62e bis 62i können Rufnummern von Teilnehmern oder weitere Funktionen zugeordnet werden. Die Kurzwahltasten 62a bis 62i sind als Schaltflächen der Bedienoberfläche ausgebildet und lassen sich z.B. mit Hilfe eines Zeigergerätes, wie einer sogenannten Computermaus, aktivieren. Dadurch wird entweder die mit Hilfe der Kurzwahltaste gespeicherte Information aktiviert, oder eine gespeicherte Rufnummer für einen Verbindungsaufbau ausgewählt. Ein Tastenfeld 70 ist einem Tastenfeld von konventionellen Telefonen nachempfunden, wobei den grafischen Elementen der einzelnen Tasten Schaltflächen hinterlegt sind, mit deren Hilfe die entsprechende Ziffer bzw. Taste ausgewählt werden kann.

Weiterhin hat die Bedienoberfläche ein Anzeigefeld 66, das einer Anzeigeeinheit eines konventionellen Telefons nachempfunden ist. Das Anzeigefeld 66 hat einen Anzeigebereich 66a, in dem eine Rufnummer angezeigt wird, die die interne Rufnummer der Teilnehmerstation in einer CENTREX-Gruppe ist, zu der der Teilnehmeranschluss des Endgerätes 32 gehört. Weiterhin hat das Anzeigefeld 66 einen Anzeigebereich 66b, in dem die eigene Rufnummer des Teilnehmeranschlusses angezeigt wird, mit der die Teilnehmerstation über das öffentliche leitungsvermittelte Telefonnetz erreichbar ist. Mit Hilfe des Anzeigefeldes 66 können dem Teilnehmer weitere Informationen, wie z.B. die Rufnummer eines rufenden Teilnehmers oder Einstellmöglichkeiten zur Steuerung von Dienst- und/oder Leistungsmerkmalen angezeigt werden. Mit Hilfe weiterer Schaltflächen der dargestellten Tastengruppe 68 sowie der weiteren Gruppe von Funktionstasten 72 können weitere Bedienfunktionen und Leistungsmerkmale aktiviert, deaktiviert und administriert werden. Die Funktionen dieser Tasten sind einem realen Telefon nachempfunden. Die Kurzwahltasten 62a bis 62i haben Anzeigebereiche, wobei nur der Anzeigebereich 74i der Kurzwahltaste 62i bezeichnet ist. Ist z.B. die Funktion, die der Kurzwahltaste hinterlegt ist, aktiviert, wird der Anzeigebereich dieser Kurzwahltaste z.B. rot dargestellt. Wird ein Anruf geparkt, so ist der Anzeigebereich der Kurzwahltaste 62b dann mit roter Farbe darstellt. Ist eine Verbindung zu einem Teilnehmer aktiviert, dessen Rufnummer mit Hilfe einer Kurzwahltaste aufrufbar ist, so wird der Anzeigebereich dieser Kurzwahltaste während der Verbindung rot dargestellt. Die Bereiche 64a und 64b dienen zur grafischen Darstellung von Markennamen, wie z.B. des Herstellers des abgebildeten Telefons und/oder des Herstellers der Software zum Darstellen des Telefons.

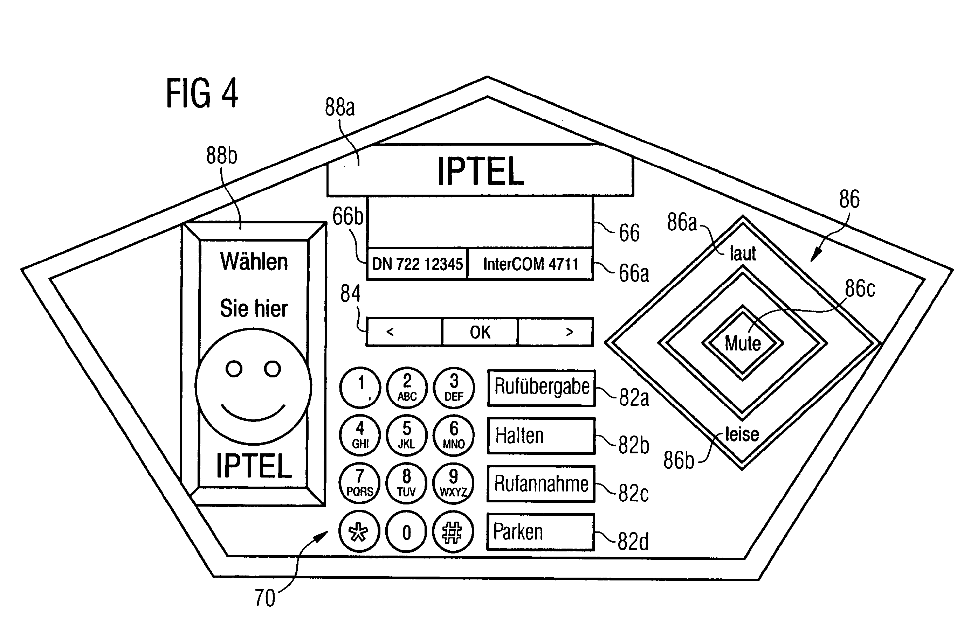

In Figur 4 ist eine weitere mögliche grafische Benutzeroberfläche 80 des Endgerätes 32 dargestellt. Die grafische Benutzeroberfläche 80 hat ebenfalls wie die grafische Benutzeroberfläche 60 ein Anzeigefeld 66 mit den Anzeigebereichen 66a und 66b. Die Funktionen des Anzeigefelds 66 und der Anzeigebereiche 66a, 66b wurden bereits in der Beschreibung zu Figur 3 erläutert. Auch hat die grafische Benutzeroberfläche 80 wie die Benutzeroberfläche 60 aus Figur 3 ein Tastenfeld 70. Weiterhin sind Funktionstasten 82a bis 82d vorgesehen, wobei die Funktionstaste 82a zum Übernehmen von Gesprächen, die Funktionstaste 82b zum Halten von Gesprächen, die Funktionstaste 82c zum Parken von Gesprächen und die Funktionstaste 82d zum Umleiten von Gesprächen dienen. Weiterhin ist ein Tastenfeld 84 vorgesehen, das zum Steuern von Funktions- und Leistungsmerkmalen sowie zur Konfiguration von Einstellmöglichkeiten des Endgerätes 32 dient.

Ein Anzeigefeld 86 dient zur Anzeige von verschiedenen Einstellmöglichkeiten, wobei aktuell die Einstellmöglichkeit der Hörlautstärke angezeigt wird. Dieser Anzeigebereich ist ebenso wie das Tastenfeld 70, die Funktionstasten 82a bis 82d und das Tastenfeld 84 mit Schaltflächen hinterlegt, die z.B. mit Hilfe eines Zeigergerätes aktiviert werden können. Beim Anzeigebereich 86 kann mit Hilfe des Zeigergerätes auf der Schaltfläche "Laut" 86a die Hörlautstärke erhöht und mit der Schaltfläche "Leise" 86b die Hörlautstärke verringert werden. Mit Hilfe der Schaltfläche 86c lässt sich der Hörer stumm schalten. Die Bereiche 88a und 88b dienen zur Darstellung von Werbeinformationen, wobei dem Anzeigebereich 88b eine Schaltfläche hinterlegt ist, bei deren Aktivierung eine Verbindung zu einer der Schaltfläche 88b zugeordneten Rufnummer aufgebaut wird. Somit dient diese Werbefläche 88b auch als Kurzwahltaste.

Die grafischen Elemente 66, 70, 82a bis 82d, 84, 86, 88 können von dem Benutzer des Endgerätes beliebig auf der grafischen Benutzeroberfläche angeordnet werden. Dies kann z.B. mit Hilfe eines dafür vorgesehenen Programmmoduls des Endgerätes 32 erfolgen. Dabei kann der Benutzer diese grafischen Elemente 66, 70, 82a bis 82d, 84, 86, 88 z.B. mit Hilfe des Zeigergerätes zusammen mit den den grafischen Elementen 66, 70, 82a bis 82d, 84, 86, 88 hinterlegten Schaltflächen auf dem Bildschirm verschieben, löschen oder weitere Bedienelemente und/oder Anzeigeelemente hinzufügen. Auch kann er einzelne grafische Elemente, wie z.B. den Tastenblock 70 oder die Kurzwahltasten 82a bis 82d in ihrer grafischen Darstellung verändern. Die Größe der einzelnen grafischen Elemente 66, 70, 82a bis 82d, 84, 86, 88 kann durch den Benutzer beliebig angepasst werden. Die Größe der den grafischen Elementen 66, 70, 82a bis 82d, 84, 86, 88 hinterlegten Schaltflächen wird dabei automatisch mit angepasst.

Die Bedienung des Endgerätes 32 muss jedoch nicht ausschließlich über ein Zeigergerät erfolgen. So kann z.B. die Rufnummer auch über die Zifferntastatur des Endgerätes 32 eingegeben werden. Auch kann als Anzeigeeinheit des Endgerätes 32 ein tastsensitiver Bildschirm vorgesehen sein, wobei die Aktivierung der einzelnen Schaltflächen durch Berührung der Bildschirmoberfläche durch einen Benutzer erfolgt. Ein solcher tastsensitiver Bildschirm wird auch als Touchscreen bezeichnet. Vorzugsweise wird als Endgerät 32 ein Computer, z.B. ein Personalcomputer, genutzt. Es sind aber auch andere Geräte denkbar, die z.B. als spezielles IP-Telefon ausgeführt sind. Bei solchen Geräten ist es insbesondere möglich, die Leistungsaufnahme gegenüber einem Personalcomputer zu verringern. Auch kann dieses Gerät so angepasst werden, dass ein Benutzer den gleichen Bedienkomfort beim Bedienen des Gerätes hat, wie beim Bedienen eines konventionellen Telefons. So können z.B. das Tastenfeld 70 und/oder Funktionstasten 82a bis 82d sowie weitere Tastengruppen und Anzeigefelder bei dem Gerät hardwaremäßig ausgeführt sein. Sowohl an einen als IP-Terminal genutzten Computer als auch an ein spezielles IP-Telefon kann ein konventioneller Telefonhörer angeschlossen sein, mit dessen Hilfe die Sprachdaten widergegeben und erfasst werden. Jedoch können sowohl an den Personalcomputer als auch an das IP-Telefon andere Ein- und Ausgabeeinheiten angeschlossen werden, wie z.B. ein sogenanntes Headset, das aus einem Kopfhörer und einem mit dem Kopfhörer verbundenen Mikrofon besteht, oder einen Lautsprecher und ein separates Mikrofon.

Als Bedienoberfläche kann aber eine Darstellung eines Faxgerätes oder eines Anrufbeantworters bzw. eine kombinierte Darstellung dieser Geräte mit einem Telefon genutzt werden. Somit werden dem Benutzer weitere Kommunikationsmöglichkeiten zur Verfügung gestellt, die bereits mit konventionellen Kommunikationsgeräten nutzbar sind.

## Patentansprüche

1. Endgerät eines paketvermittelnden Kommunikationsnetzes, das an ein paketvermittelndes Kommunikationsnetz angeschlossen ist,
das eine Datenverarbeitungsanlage enthält, die ein erstes Programmmodul (12 bis 22) zum Verarbeiten von ersten Signalisierungsinformationen eines paketvermittelnden Kommunikationsnetzes (30) umfasst,
wobei diese ersten Signalisierungsinformationen in einem ersten paketvermittelnden Standardprotokoll definiert sind und
mit Hilfe von Signalisierungspaketen des paketvermittelnden Kommunikationsnetzes übertragen werden, **dadurch gekennzeichnet, dass**
das erste Programmmodul (12 bis 22) ausgebildet ist, zweite Signalisierungsinformationen zu verarbeiten, die mit Hilfe von Datenpaketen des paketvermittelnden Kommunikationsnetzes (30) übertragen werden, und die nach einem zweiten Standardprotokoll definiert sind, das von dem ersten Standardprotokoll abweicht.

2. Endgerät nach Anspruch 1, **dadurch gekennzeichnet, dass** die zweiten Signalisierungsinformationen Signalisierungsinformationen eines leitungsvermittelnden Kommunikationsnetzes sind.

3. Endgerät nach Anspruch 2, **dadurch gekennzeichnet, dass** die zweiten Signalisierungsinformationen Signalisierungsinformationen gemäß einem DSS1-Signalisierungsprotokoll sind.

4. Endgerät nach einem der vorhergehenden Ansprüche, **dadurch gekennzeichnet, dass** die ersten Signalisierungsinformationen Signalisierungsinformationen gemäß einem H.323/H.450-Signalisierungsprotokoll sind.

5. Endgerät nach einem der vorhergehenden Ansprüche, **dadurch gekennzeichnet, dass** die Datenpakete, mit deren Hilfe die zweiten Signalisierungsinformationen übertragen werden, in einem Bereich der Signalisierungspakete übertragen werden, der keine ersten Signalisierungsinformationen enthält.

6. Endgerät nach einem der vorhergehenden Ansprüche, **dadurch gekennzeichnet, dass** Signalisierungsinformationen für mindestens ein Dienst- und/oder Leistungsmerkmal, das nicht mit Hilfe der ersten Signalisierungsinformationen nutzbar ist, als zweite Signalisierungsinformationen übertragen werden.

7. Endgerät nach Anspruch 6, **dadurch gekennzeichnet, dass** das Dienst- und/oder Leistungsmerkmal eine Rufübernahme, eine Dreierkonferenz, eine große Konferenz, ein Halten, eine Anzeige von Gebühreninformationen, eine geschlossene Benutzergruppe, eine Rufnummernidentifikation, ein automatischer Rückruf bei besetzt, ein automatischer Rückruf bei keiner Antwort, eine Rufsperre, eine Indikation von wartenden Nachrichten und/oder eine Anrufweiterleitung umfasst.

8. Endgerät nach einem der vorhergehenden Ansprüche, **dadurch gekennzeichnet, dass** die zweiten Signalisierungsinformationen mit Hilfe des paketvermittelnden Kommunikationsnetzes vom Endgerät zu einem weiteren Endgerät nach dem Tunnelprinzip übertragen werden und umgekehrt.

9. Endgerät nach Anspruch 8, **dadurch gekennzeichnet, dass** die zweiten Signalisierungsinformationen mit Hilfe des paketvermittelnden Kommunikationsnetzes vom Endgerät zu einer Schnittstelleneinheit zwischen dem paketvermittelnden Kommunikationsnetz und einem leitungsvermittelnden Kommunikationsnetz übertragen werden und umgekehrt.

10. Endgerät nach Anspruch 9, **dadurch gekennzeichnet, dass** die Schnittstelleneinheit die Signalisierungsinformationen des leitungsvermittelnden Kommunikationsnetzes in erste Signalisierungsinformationen konvertiert und umgekehrt, wobei die zweiten Signalisierungsinformationen die Signalisierungsinformationen des leitungsvermittelnden Kommunikationsnetzes umfassen, die nicht in erste Signalisierungsinformationen konvertierbar sind.

11. Endgerät nach einem der vorhergehenden Ansprüche, **dadurch gekennzeichnet, dass** die Datenverarbeitungsanlage ein zweites Programmmodul (26) enthält, das die übertragenen Signalisierungsinformationen in Bildinformationen zur Anzeige auf einer Anzeigeeinheit wandelt und Informationen verarbeitet, die mit Hilfe einer Eingabeeinheit eingegeben werden, wobei Daten zwischen dem ersten Programmmodul (12 bis 22) und dem zweiten Programmmodul (26) ausgetauscht werden.

12. Endgerät nach Anspruch 11, **dadurch gekennzeichnet, dass** das erste Programmmodul (12 bis 22) die mit Hilfe des zweiten Programmmoduls (26) erfassten Informationen zur Übertragung durch das paketvermittelnde Kommunikationsnetz (30) aufbereitet.

13. Endgerät nach Anspruch 12, **dadurch gekennzeichnet, dass** die Daten zwischen dem ersten Programmmodul (12 bis 22) und dem zweiten Programmmodul (26) mit Hilfe einer Programmschnittstelle ausgetauscht werden.

14. Endgerät nach Anspruch 13, **dadurch gekennzeichnet, dass** die ersten Signalisierungsinformationen und/oder zweiten Signalisierungsinformationen in einer Datenbank (24) der Datenverarbeitungsanlage gespeichert sind.

15. Endgerät nach einem der Ansprüche 11-14, **dadurch gekennzeichnet, dass** das zweite Programmmodul (26) eine grafische Benutzeroberfläche bereitstellt.

16. Endgerät nach einem der vorhergehenden Ansprüche, **dadurch gekennzeichnet, dass** die zweiten Signalisierungsinformationen von einem dritten Programmmodul (18 bis 22) verarbeitet und erzeugt werden.

17. Endgerät nach einem der vorhergehenden Ansprüche, **dadurch gekennzeichnet, dass** das paketvermittelnde Kommunikationsnetz (30) ein auf einem Internetprotokoll basierendes Datennetz ist, und dass das Endgerät (32) ein IP-Terminal ist.

18. Endgerät nach einem der vorhergehenden Ansprüche, **dadurch gekennzeichnet, dass** mit Hilfe des Endgerätes eine Sprachverbindung zu einem weiteren Teilnehmer aufbaubar ist.

19. Endgerät nach einem der vorhergehenden Ansprüche, **dadurch gekennzeichnet, dass** ein zweites Programmmodul (26) eine grafische Benutzeroberfläche zur Eingabe und zur Ausgabe von Daten bereitstellt.

20. Endgerät nach Anspruch 19, **dadurch gekennzeichnet, dass** die Datenverarbeitungsanlage ein viertes Programmmodul enthält, mit dessen Hilfe die grafische Benutzeroberfläche bearbeitet werden kann.

21. Endgerät nach Anspruch 19 oder 20, **dadurch gekennzeichnet, dass** in der Datenverarbeitungsanlage mehrere mögliche grafische Benutzeroberflächen gespeichert sind, und dass die Benutzeroberflächen mit Hilfe des zweiten Programmmoduls (26) umschaltbar sind.

22. Endgerät nach Anspruch 19, 20 oder 21, **dadurch gekennzeichnet, dass** die Eingabe der Informationen mit Hilfe von Schaltflächen der grafischen Benutzeroberfläche erfolgt.

23. Endgerät nach einem der vorhergehenden Ansprüche, d a - **durch gekennzeichnet** , dass das Endgerät (32) ein Computersystem mit Software und Hardware ist.

24. Verfahren zum Betreiben eines Telekommunikations-Systems mit einem paketvermittelnden Kommunikationsnetz,
bei dem ein mit einem paketvermittelnden Kommunikationsnetz verbundenes Endgerät (32) eine Datenverarbeitungsanlage enthält, die ein erstes Programmmodul (12 bis 22) umfasst, mit dessen Hilfe erste Signalisierungsinformationen des paketvermittelnden Kommunikationsnetzes (30) verarbeitet werden,
wobei diese ersten Signalisierungsinformationen in einem ersten paketvermittelnden Standardprotokoll definiert sind und
mit Hilfe von Signalisierungspaketen des paketvermittelnden Kommunikationsnetzes übertragen werden, **dadurch gekennzeichnet, dass**
das erste Programmmodul (12 bis 22) ausgebildet ist, zweite Signalisierungsinformationen zu verarbeiten, die mit Hilfe von Datenpaketen des paketvermittelnden Kommunikationsnetzes (30) übertragen werden, und die nach einem zweiten Standardprotokoll definiert sind, das von dem ersten Standardprotokoll abweicht.

25. Verfahren nach einem der vorhergehenden Ansprüche, **dadurch gekennzeichnet, dass** die ersten Signalisierungsinformationen Signalisierungsinformationen gemäß einem H.323/H.450-Signalisierungsprotokoll sind.

26. Verfahren nach Anspruch 24 oder 25, **dadurch gekennzeichnet, dass** die zweiten Signalisierungsinformationen Signalisierungsinformationen gemäß einem DSS1-Signalisierungsprotokoll sind.

27. Verfahren nach einem der vorhergehenden Ansprüche, **dadurch gekennzeichnet, dass** das paketvermittelnde Kommunikationsnetz (30) ein auf einem Internetprotokoll basierendes Datennetz ist, und dass das Endgerät (32) ein IP-Terminal ist.

## Claims

1. A terminal of a packet-switching communications network which is connected to a packet-switching communications network,
which contains a data processing system which comprises a first program module (12 to 22) for processing first signaling information of a packet-switching communications network (30), this first signaling information being defined in a first packet-switching standard protocol and being transmitted using signaling packets of the packet-switching communications network, **characterized in that**
the first program module (12 to 22) is designed to process second signaling information which is transmitted using data packets for the packet-switching communications network (30) and which is defined according to a second standard protocol which differs from the first standard protocol.

2. The terminal as claimed in claim 1, **characterized in that** the second signaling information is signaling information of a line-switching communications network.

3. The terminal as claimed in claim 2, **characterized in that** the second signaling information is signaling information in accordance with a DSS1 signaling protocol.

4. The terminal as claimed in one of the preceding claims, **characterized in that** the first signaling information is signaling information in accordance with an H.323/H.450 signaling protocol.

5. The terminal as claimed in one of the preceding claims, **characterized in that** the data packets, which are used to transmit the second signaling information, are transmitted in a part of the signaling packets which does not contain any first signaling information.

6. The terminal as claimed in one of the preceding claims, **characterized in that** signaling information for at least one service feature and/or feature which cannot be used by means of the first signaling information is transmitted as second signaling information.

7. The terminal as claimed in claim 6, **characterized in that** the service feature and/or feature comprises a call pick-up, three-way conferencing, large-scale conferencing, holding, displaying of toll information, a closed user group, call number identification, automatic call back when busy, automatic call back when no response, call barring, call waiting indication and/or call transfer.

8. The terminal as claimed in one of the preceding claims, **characterized in that** the second signaling information is transmitted from the terminal to a further terminal, and vice versa, using the packet-switching communications network in accordance with the tunnel principle.

9. The terminal as claimed in claim 8, **characterized in that** the second signaling information is transmitted from the terminal to an interface unit between the packet-switching communications network and a line-switching communications network, and vice versa, using the packet-switching communications network.

10. The terminal as claimed in claim 9, **characterized in that** the interface unit converts the signaling information of the line-switching communications network into first signaling information, and vice versa, the second signaling information comprising the signaling information of the line-switching communications network which cannot be converted into first signaling information.

11. The terminal as claimed in one of the preceding claims, **characterized in that** the data processing system contains a second program module (26) which converts the transmitted signaling information into image information to be displayed on a display unit, and processes information which is input using an input unit, data being exchanged between the first program module (12 to 22) and the second program module (26).

12. The terminal as claimed in claim 11, **characterized in that** the first program module (12 to 22) conditions the information acquired using the second program module (26) in order to transmit it through the packet-switching communications network (30).

13. The terminal as claimed in claim 12, **characterized in that** the data is exchanged between the first program module (12 to 22) and the second program module (26) using a program interface.

14. The terminal as claimed in claim 13, **characterized in that** the first signaling information and/or second signaling information is stored in a database (24) of the data processing system.

15. The terminal as claimed in one of claims 11-14, **characterized in that** the second program module (26) makes available a graphic user interface.

16. The terminal as claimed in one of the preceding claims, **characterized in that** the second signaling information is processed and generated by a third program module (18 to 22).

17. The terminal as claimed in one of the preceding claims, **characterized in that** the packet-switching communications network (30) is a data network which is based on an Internet protocol, and **in that** the terminal (32) is an IP terminal.

18. The terminal as claimed in one of the preceding claims, **characterized in that** a voice connection to a further subscriber can be set up using the terminal.

19. The terminal as claimed in one of the preceding claims, **characterized in that** a second program module (26) makes available a graphic user interface for inputting and outputting data.

20. The terminal as claimed in claim 19, **characterized in that** the data processing system contains a fourth program module which can be used to process the graphic user interface.

21. The terminal as claimed in claim 19 or 20, **characterized in that** a plurality of possible graphic user interfaces are stored in the data processing system, and **in that** the user interfaces can be switched over using the second program module (26).

22. The terminal as claimed in claim 19, 20 or 21,
**characterized in that** the information is input using buttons on the graphic user interface.

23. The terminal as claimed in one of the preceding claims, **characterized in that** the terminal (32) is a computer system with software and hardware.

24. A method for operating a telecommunications system having a packet-switching communications network,
in which a terminal (32) which is connected to a packet-switching communications network contains a data processing system which comprises a first program module (12 to 22) which is used to process first signaling information of the packet-switching communications network (30),
this first signaling information being defined in a first packet-switching standard protocol and being transmitted using signaling packets of the packet-switching communications network, **characterized in that** the first program module (12 to 22) is designed to process second signaling information which is transmitted using data packets of the packet-switching communications network (30) and which is defined according to a second standard protocol which differs from the first standard protocol.

25. The method as claimed in one of the preceding claims, **characterized in that** the first signaling information is signaling information in accordance with an H.323/H.450 signaling protocol.

26. The method as claimed in claim 24 or 25, **characterized in that** the second signaling information is signaling information in accordance with a DSS1 signaling protocol.

27. The method as claimed in one of the preceding claims, **characterized in that** the packet-switching communications network (30) is a data network which is based on an Internet protocol, and **in that** the terminal (32) is an IP terminal.

## Revendications

1. Terminal d'un réseau de communication à commutation de paquets, qui est raccordé à un réseau de communication à commutation de paquets,
qui contient une installation de traitement de données comprenant un premier module de programme (12 à 22) destiné au traitement de premières informations de signalisation d'un réseau de communication à commutation de paquets (30), ces premières informations de signalisation étant définies dans un premier protocole standard à commutation de paquets et transmises à l'aide de paquets de signalisation du réseau de communication à commutation de paquets, **caractérisé en ce que**
le premier module de programme (12 à 22) est développé pour traiter des deuxièmes informations de signalisation qui sont transmises à l'aide de paquets de données du réseau de communication à commutation de paquets (30), et qui sont définies selon un deuxième protocole standard qui diffère du premier protocole standard.

2. Terminal selon la revendication 1, **caractérisé en ce que** les informations de signalisation sont des informations de signalisation d'un réseau de communication à commutation de circuits.

3. Terminal selon la revendication 2, **caractérisé en ce que** les informations de signalisation sont des informations de signalisation selon un protocole de signalisation DSS1.

4. Terminal selon l'une quelconque des revendications précédentes, **caractérisé en ce que** les premières informations de signalisation sont des informations de signalisation selon un protocole de signalisation H.323/H.450.

5. Terminal selon l'une quelconque des revendications précédentes, **caractérisé en ce que** les paquets de données, à l'aide desquels les deuxièmes informations de signalisation sont transmises, sont transférés dans une plage des paquets de signalisation ne contenant pas de premières informations de signalisation.

6. Terminal selon l'une quelconque des revendications précédentes, **caractérisé en ce que** les informations de signalisation sont transmises en tant que deuxièmes informations de signalisation pour au moins un service et/ou une prestation qui ne sont pas exploitables à l'aide des premières informations de signalisation.

7. Terminal selon la revendication 6, **caractérisé en ce que** le complément de service et/ou de prestation comprennent une acceptation d'appel, une conférence à trois, une grande conférence, un maintien, un affichage d'informations de taxe, un groupe d'abonnés fermé, une identification de numéro d'appel, un rappel automatique sur poste occupé, un rappel automatique en cas de non-réponse, un appel de départ interdit, une indication de messages en attente et/ou un transfère d'appel.

8. Terminal selon l'une quelconque des revendications précédentes, **caractérisé en ce qu'**à l'aide du réseau de communication à commutation de paquets, les deuxièmes informations de signalisation sont transmises selon le principe du tunnel du terminal vers un autre terminal et vice versa.

9. Terminal selon la revendication 8, **caractérisé en ce qu'**à l'aide du réseau de communication à commutation de paquets, les deuxièmes informations de signalisation sont transmises du terminal vers une unité d'interface entre le réseau de communication à commutation de paquets et un réseau de communication à commutation de circuits et vice versa.

10. Terminal selon la revendication 9, **caractérisé en ce que** l'unité d'interface convertit les informations de signalisation du réseau de communication à commutation de circuits en premières informations de signalisation et vice versa, les deuxièmes informations de signalisation comprenant les informations de signalisation du réseau de communication à commutation de circuits, qui ne sont pas convertibles en premières informations de signalisation.

11. Terminal selon l'une quelconque des revendications précédentes, **caractérisé en ce que** l'installation de traitement de données contient un deuxième module de programme (26), qui convertit les informations de signalisation transmises en informations d'image pour l'affichage sur une unité d'affichage, et traite des informations qui sont entrées à l'aide d'une unité d'entrée, des données étant échangées entre le premier module de programme (12 à 22) et le deuxième module de programme (26).

12. Terminal selon la revendication 11, **caractérisé en ce que** le premier module de programme (12 à 22) traite les informations enregistrées à l'aide du deuxième module de programme (26) pour la transmission par le réseau de communication à commutation de paquets (30).

13. Terminal selon la revendication 12, **caractérisé en ce que** les données sont échangées entre le premier module de programme (12 à 22) et le deuxième module de programme (26) à l'aide d'une interface de programme.

14. Terminal selon la revendication 13, **caractérisé en ce que** les premières informations de signalisation et/ou les deuxièmes informations de signalisation sont mémorisées dans une banque de données (24) de l'installation de traitement de données.

15. Terminal selon l'une quelconque des revendications 11 à 14, **caractérisé en ce que** le deuxième module de programme (26) fournit une interface utilisateur graphique.

16. Terminal selon l'une quelconque des revendications précédentes, **caractérisé en ce que** les deuxièmes informations de signalisation sont traitées et générées par un troisième module de programme (18 à 22).

17. Terminal selon l'une quelconque des revendications précédentes, **caractérisé en ce que** le réseau de communication à commutation de paquets (30) est un réseau de données basé sur le protocole Internet et **en ce que** le terminal (32) est un terminal IP.

18. Terminal selon l'une quelconque des revendications précédentes, **caractérisé en ce qu'**une liaison vocale vers un autre abonné peut être établie à l'aide du terminal.

19. Terminal selon l'une quelconque des revendications précédentes, **caractérisé en ce qu'**un deuxième module de programme (26) fournit une interface utilisateur graphique pour l'entrée et la sortie de données.

20. Terminal selon la revendication 19, **caractérisé en ce que** l'installation de traitement de données contient un quatrième module de programme, à l'aide duquel l'interface utilisateur graphique peut être traitée.

21. Terminal selon la revendication 19 ou 20, **caractérisé en ce que** plusieurs interfaces utilisateur graphiques possibles sont mémorisées dans l'installation de traitement de données, et **en ce que** les interfaces utilisateur sont commutables à l'aide du deuxième module de programme (26).

22. Terminal selon la revendication 19, 20 ou 21, **caractérisé en ce que** l'entrée des informations est réalisée à l'aide de boutons de commande de l'interface utilisateur graphique.

23. Terminal selon l'une quelconque des revendications précédentes, **caractérisé en ce que** le terminal (32) est un système d'ordinateur avec logiciel et équipement informatique.

24. Procédé destiné à faire fonctionner un système de télécommunication à l'aide d'un réseau de communication à commutation de paquets,
dans lequel un terminal (32) raccordé à un réseau de communication à commutation de paquets contient une installation de traitement de données comprenant un premier module de programme (12 à 22) à l'aide duquel des premières informations de signalisation du réseau de communication à commutation de paquets (30) sont traitées, ces premières informations de signalisation étant définies dans un premier protocole standard à commutation de paquets et étant transmises à l'aide de paquets de signalisation du réseau de communication à commutation de paquets, **caractérisé en ce que**
le premier module de programme (12 à 22) est développé pour traiter des deuxièmes informations de signalisation qui sont transmises à l'aide de paquets de données du réseau de communication à commutation de paquets (30), et qui sont définies selon un deuxième protocole standard qui diffère du premier protocole standard.

25. Procédé selon l'une quelconque des revendications précédentes, **caractérisé en ce que** les premières informations de signalisation sont des informations de signalisation selon un protocole de signalisation H.323/H.450.

26. Procédé selon la revendication 24 ou 25, **caractérisé en ce que** les deuxièmes informations de signalisation sont des informations de signalisation selon un protocole de signalisation DSS1.

27. Procédé selon l'une quelconque des revendications précédentes, **caractérisé en ce que** le réseau de communication à commutation de paquets (30) est un réseau de données basé sur un protocole Internet, et **en ce que** le terminal (32) est un terminal IP.
